Europäisches Patentamt

European Patent Office

Office européen des brevets

(11) Publication number: **0 157 077**
**B1**

(12) **EUROPEAN PATENT SPECIFICATION**

(45) Date of publication of patent specification: **13.07.88**

(51) Int. Cl.⁴: **F 16 L 39/04,** C 03 B 37/025

(21) Application number: **85100149.5**

(22) Date of filing: **09.01.85**

(54) Airtight rotating joint.

(30) Priority: **10.01.84 IT 6701784**

(43) Date of publication of application:
**09.10.85 Bulletin 85/41**

(45) Publication of the grant of the patent:
**13.07.88 Bulletin 88/28**

(84) Designated Contracting States:
**CH DE FR GB LI NL SE**

(56) References cited:
**CH-A- 246 520**
**DE-A-1 952 835**
**FR-A-2 504 230**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Parisi, Giuseppe**
**Via Buscaglioni, N.2**
**Torino (IT)**

(74) Representative: **Riederer Freiherr von Paar zu Schönau, Anton et al**
**Van der Werth, Lederer & Riederer Freyung 615**
**Postfach 2664**
**D-8300 Landshut (DE)**

Courier Press, Leamington Spa, England.

## Description

The present invention relates to mechanical devices for use in equipments for chemical processes, and more particularly it concerns a air-tight rotating joint, permitting the transfer without fluid leaks between the rotating part and the fixed one.

A rotating joint for supplying a rotating cylinder with a heating or cooling medium and for taking over such exhaust medium from the cylinder is known from CH—A—246 520. The joint comprises a first, central conduit for e.g. supplying steam, and a second conduit surrounding the central conduit for transporting the exhausted steam. In the interface region between the fixed and the rotating part, O-ring seals separate the conduits. Further, near this region, certain lengths of coiled spring tube are inserted for compensating any clearance and pressing upon the O-rings. From DE—A—1 952 835, a rotating joint for transporting liquid or gaseous media to a ship is known, wherein in the interface between the rotating and the fixed part an annular groove is provided connected to a drain so as to drain off any leaking substances penetrating out from the conduit.

A special technical problem is the connection of a rotating and a fixed part of an equipment for the chemical process of forming optical fibre preforms by chemical vapour deposition (CVD) technique, where toxic and strong corrosive gases participate. Of course the inside of the rotating part has to be strictly isolated from the environment and the required pressure is to be maintained in function of the process to be developed.

There are to be avoided both infiltrations from the outside of materials such as gases, vapours or dusts, as they might pollute the process materials contained in the rotating part, and leakages of the materials which are present inside, which are particularly toxic and corrosive. In such use, all the joint parts are to be made of an inert material to avoid their corrosion, and to prevent the joint itself from polluting material involved in the process. The above difficulties are overcome by the use of the rotating joint as provided by the present invention defined in the claims, which allows fluids to be convected from the rotating part to the fixed one and vice versa without allowing infiltrations from the environment or leakages from the inside of polluting or toxic materials, and is corrosion resistant. Particularly, the joint is used in an equipment for fabricating optical fibre preforms by CVD technique, for guiding corrosive reactants under pressure through the first and second conduits and a rotating support tube, the fixed and rotating parts consisting of a material withstanding the reactants.

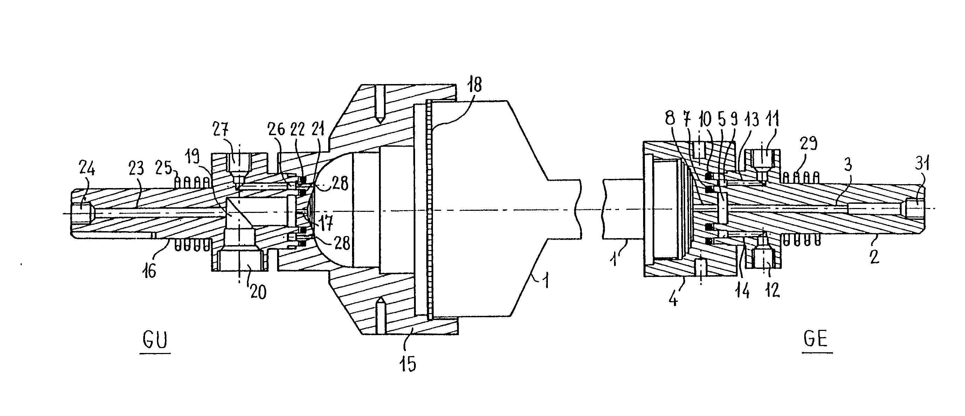

An embodiment of this invention will now be described, by way of example, with reference to the accompanying drawing in which the sole figure is a longitudinal sectional view of the device supporting a support tube for the fabrication of optical-fibre preforms by chemical vapour deposition (CVD) technique. According to this process, the row material the optical fibres are made of is obtained from the reaction of suitable gases and vapours.

The reaction chamber or support tube consists of a quartz tube, denoted by 1 in the figure, which is rotated around its axis, while the material obtained from the reaction is deposited on the internal walls. The reaction is aided by a hydrogen flame burner, not shown in the figure, which is moving along the axis of the quartz tube.

Reactant gases, such as silicon tetrachloride, germanium tetrachloride, oxygen, Freon, etc. arriving from the feeding system, are introduced through the fixed part 2 of the inlet rotating joint GE.

The part 2 is provided with an inlet conduit 3 for the reactants apt to house a flexible conduit coming from the main feeding system. The seal between this flexible conduit and the fixed part is ensured by an O ring placed on the bottom of a threaded orifice 31 of conduit 3, and pressed by a screw with an axial hole through which the conduit enters.

Fixed part 2 is connected to rotating part 4 of the joint through a sealed cylindrical chamber 5 for the reactants, rendered air-tight by elastic ring 7 and allows the reactant flow to reaction conduit 1 through a conduit 8.

A second, annular chamber 9 is used to improve the seal of the first chamber 5, as small leakages towards the inside or the outside through the rotating surfaces are always possible. This second chamber is rendered airtight by means of O ring 10 and is pressurized by a continuous and controlled flow of highly-pure oxygen or argon, obtained through an inlet orifice 11 and an outlet orifice 12, connected to chamber 9, by means of conduits 13 and 14 respectively.

The pressure in chamber 9 is maintained at a value which is intermediate between the value present inside chamber 5 and that of the environment.

Thus, polluting fluid infiltrations from the outside towards chamber 9 and from chamber 9 towards chamber 5, connected with the reaction conduit, are avoided.

Outlet rotating-joint GU, composed of a rotating part 15 and of a fixed part 16, is placed at the other end of conduit 1.

This second joint is to maintain a predetermined pressure inside the conduit. That is obtained by making in the axial zone of the rotating part 15 a suitable diameter outlet hole 17 in view of the required pressure and of the reactant flow traversing the reaction conduit. To avoid the solid particles present as reaction products from accumulating near this hole, part 15 is equipped with a filter 18 with smaller diameter holes. Hole 17 is in communication with a cylindrical exhaust chamber 19 and an outlet 20, comprised in the fixed part 16, through which the reaction products flow. The seal of chamber 19 is ensured by O ring 21. A conduit 23 houses a sliding rod, equipped with a pin capable of penetrating inside hole 17 to free it from possible blockings. The rod is hermetically sealed by means of a screw with a hole fastened into orifice 24 of conduit 23, and an O ring pressed against the bottom of the orifice.

Also this outlet joint is equipped with a second sealed annular chamber 26, inserted between O rings 21 and 22 and made to communicate with inlet 27 and with holes 28, communicating with reaction conduit 1.

Through inlet 27 there is conveyed a pressurization gas such as oxygen or argon in highly pure form, whose flow ensures the desired pressure inside the reaction conduit. A system using a particular pressurization technique is described, for instance, in EP—A—0088374, published on September 14, 1983, in the name of the applicant. Chamber 19 is connected to a pressure lower than the pressure in conduit 1 so as to help the flow of the reaction products.

As a consequence, leakages of toxic materials towards the outside are rare, whilst possible polluting fluid infiltrations are prevented by the presence of chamber 26, which is at higher pressure than the environment.

Pressure difference between the reaction conduit and chamber 19 is due, as previously said, to the presence of hole 17 whose diameter has been properly calculated.

Fixed parts 16 and 2 of joints GU and GE are held in contact with the respective rotating parts 15 and 4 by two springs 25 and 29, compressed between the fixed parts themselves and the part of the device which supports the conduit and the joints. The springs being located outside, they can not be corroded by the reactants. As the joint is used to conduct corrosive materials, all its parts are advantageously made of polytetrafluoroethylene.

## Claims

1. An airtight rotating joint composed of a rotating part and a fixed part contacting each other at respective front faces, comprising a first axial conduit (3, 19) in the fixed part (2, 16) and a second conduit (8, 17) in the rotating part (4, 15) communicating with each other, the second conduit opening into the axial end zone of the rotating part, and a first chamber (9, 26) placed between the opposed front faces, the chamber (9, 26) being hermetically sealed by a first compressed O-ring (7, 21) and a second higher-diameter O-ring (10, 22) and communicating with an orifice (11, 27) in the fixed part via a third conduit (13, 27), characterized in that a further chamber (5, 19) is also placed between the opposed front faces, the further chamber (5, 19) being connected to the conduits in the fixed and rotating parts, being hermetically sealed by said first O-ring (7, 21) and being surrounded by the first chamber, the first chamber (9, 26) being connected to a source of pressure.

2. Rotating joint as in claim 1, characterized in that the first chamber (9, 26) further communicates through a fourth conduit (14) with another orifice (12) in the fixed part (2) or through ducts with a plurality of holes (28) placed in the rotating part and opening into the axial end zone thereof.

3. Rotating joint as in claim 1 or 2, characterized in that said first chamber (9, 26) is pressurized by a continuous and controlled flow of materials of the same kind as those passing through said further chamber (5, 19).

4. Rotating joint as in any of claims 1 to 3, characterized in that said first conduit (3, 23) houses a slidable rod equipped with a pin capable of penetrating inside said second conduit (17).

5. Rotating joint as in any of claims 1 to 4, characterized in that the rotating part is equipped with a filter (18) capable of closing the axial end zone.

6. Rotating joint as in any of claims 1 to 5, characterized in that said second conduit (17) has a diameter pre-fixed in function of a desired pressure difference between the rotating part and the fixed one.

7. Rotating joint as in any of claims 1 to 6, characterized in that said fixed part is held pressed against that rotating part by springs (25, 29).

8. Rotating joint as in any of claims 1 to 7, characterized in that said first (3, 23), third (13, 27) and, if provided, fourth (14) conduits are equipped with threaded orifices (31, 11, 12) where a screw with a hole can be fastened which is apt to press an O-ring against the bottom to ensure the hermetic seal of a flexible conduit passed into the hole of the screw.

9. Rotating joint as in any preceding claims, characterized in that it is made of polytetrafluoroethylene.

10. Rotating joint as in any of claims 1 to 9, characterized by the use in an equipment for fabricating optical fibre preforms by CVD technique, for guiding corrosive reactants under pressure through the first and second conduits and a rotating support tube.

## Patentansprüche

1. Luftdichte Drehverbindung aus einem rotierenden Teil und einem festen Teil, die einander an jeweiligen Stirnflächen berühren, mit einer ersten axialen Leitung (3, 19) im festen Teil (2, 16) und einer zweiten Leitung (8, 17) im rotierenden Teil (4, 15), die miteinander kommunizieren und von denen sich die zweite Leitung in die axiale Endzone des rotierenden Teils öffnet, sowie mit einer ersten Kammer (9, 26), die zwischen den gegenüberliegenden Stirnflächen angeordnet ist, hermetisch durch einen ersten zusammengedrückten O-Ring (7, 21) und einen zweiten O-Ring (10, 22) mit größerem Durchmesser abgedichtet ist und über eine dritte Leitung (13, 27) mit einer Öffnung (11, 27) im festen Teil kommuniziert, dadurch gekennzeichnet, daß zwischen den sich gegenüberliegenden Stirnflächen noch eine weitere Kammer (5, 19) angeordnet ist, die mit den Leitungen im festen und im rotierenden Teil verbunden ist, durch den ersten O-Ring (7, 21) hermetisch abgedichtet ist und von der ersten Kammer (9, 26), die mit einer Druckquelle verbunden ist, umgeben ist.

2. Drehverbindung nach Anspruch 1, dadurch gekennzeichnet, daß die erste Kammer (9, 26) weiterhin über eine vierte Leitung (14) mit einer weiteren Öffnung (12) im festen Teil (2) oder über Kanäle mit einer Mehrzahl von im rotierenden Teil angeordneten und sich in deren axiale Endzone öffnenden Löchern (28) kommuniziert.

3. Drehverbindung nach Anspruch 1 oder 2, dadurch gekennzeichnet, daß die erste Kammer (9, 26) durch einen stetigen und gesteuerten Fluß von Materialien der gleichen Art wie die durch die weitere Kammer (5, 19) tretenden Materialien unter Druck gehalten ist.

4. Drehverbindung nach einem der Ansprüche 1 bis 3, dadurch gekennzeichnet, daß die erste Leitung (3, 23) einen gleitfähigen Stab mit einer Spitze enthält, die in die zweite Leitung (17) einschiebbar ist.

5. Drehverbindung nach einem der Ansprüche 1 bis 4, dadurch gekennzeichnet, daß der rotierende Teil mit einem Filter (18) ausgestattet ist, der die axiale Endzone abschließen kann.

6. Drehverbindung nach einem der Ansprüche 1 bis 5, dadurch gekennzeichnet, daß die zweite Leitung (17) einen in Funktion von der gewünschten Druckdifferenz zwischen dem rotierenden Teil und dem festen Teil vor-festgelegten Durchmesser hat.

7. Drehverbindung nach einem der Ansprüche 1 bis 6, dadurch gekennzeichnet, daß der feste Teil durch Federn (25, 29) gegen den drehenden Teil gepreßt gehalten wird.

8. Drehverbindung nach einem der Ansprüche 1 bis 7, dadurch gekennzeichnet, daß die erste Leitung (3, 23), die dritte Leitung (13, 27) und, falls vorhanden, die vierte Leitung (14) mit Schrauböffnungen (31, 11, 12) versehen sind, in denen jeweils eine Schraube mit einer Bohrung befestigt werden kann, die einen O-Ring gegen die Unterseite drücken kann, um so die hermetische Abdichtung einer in das Loch der Schraube eingesetzten flexiblen Leitung sicherzustellen.

9. Drehverbindung nach einem der vorhergehenden Ansprüche, dadurch gekennzeichnet, daß sie aus Polytetrafluoräthylen besteht.

10. Drehverbindung nach einem der Ansprüche 1 bis 9, gekennzeichnet durch die Verwendung in einer Anlage zum Herstellen von Vorformen für Lichtleitfasern nach der CVD-Technik (Chemical Vapour Deposition, Chemische Niederschlagung aus der Dampfphase) zum Leiten korrosiver Reaktionsstoffe unter Druck durch die erste und die zweite Leitung und ein rotierendes Trägerrohr.

## Revendications

1. Joint tournant étanche, composé d'une partie tournante et d'une partie fixe, en contact réciproque le long des respectives faces frontales, qui comprend un premier conduit axial (3, 19) dans la partie fixe (2, 16) et un deuxième conduit (8, 17) dans la partie tournante (4, 15) qui communiquet entre eux, le deuxième conduit étant en communication avec l'extrémité axiale de la partie tournante, et une première chambre (9, 26) placée entre les faces frontales opposées, la chambre (9, 26) étant rendue hermétique par un premier anneau élastique comprimé (7, 21) et par un deuxième anneau élastique de diamètre plus grand (10, 22) et communiquant avec une ouverture (11, 27) dans la partie fixe à travers un troisième conduit (13, 27), caractérisé en ce qu'une ultérieure chambre (5, 19) est aussi placée entre les faces frontales opposées, l'ultérieure chambre (5, 19) communiquant avec les conduits dans la partie fixe et dans la partie tournante, étant rendue hermétique par ledit premier anneau élastique (7, 21) et étant entourée par ladite première chambre, la première chambre (9, 26) communiquant avec une source de pression.

2. Joint tournant suivant la revendication 1, caractérisé en ce que la première chambre (9, 26) communique en outre à travers un quatrième conduit (14) avec une autre ouverture (12) placée dans la partie fixe (2) ou à travers des conduits avec une pluralité de trous (28) placés dans la partie tournante et en communication avec l'extrémité axiale de la même partie.

3. Joint tournant suivant la revendication 1 ou 2, caractérisé en ce que ladite première chambre (9, 26) est pressurisée par un flux continu et contrôlé de matériaux du même genre que ceux contenus dans ladite chambre ultérieure (5, 19).

4. Joint tournant suivant l'une quelconque des revendications de 1 à 3, caractérisé en ce que ledit premier conduit (3, 23) contient une baguette coulissante qui se termine en une pointe apte à pénétrer dans ledit deuxième conduit (17).

5. Joint tournant suivant l'une quelconque des revendications de 1 à 4, caractérisé en ce que la partie tournante est dotée d'un filtre (18) apte à fermer l'extrémité axiale.

6. Joint tournant suivant l'une quelconque des revendications de 1 à 5, caractérisé en ce que ledit deuxième conduit (17) a un diamètre de valeur prédéterminée en fonction de la différence de pression désirée entre la partie tournante et la partie fixe.

7. Joint tournant suivant l'une quelconque des revendications de 1 à 6, caractérisé en ce que la partie fixe est comprimée contre la partie tournante à l'aide des ressorts (25, 29).

8. Joint tournant suivant l'une quelconque des revendications de 1 à 7, caractérisé en ce que le premier (3, 23), troisième (13, 27) et, le cas échéant, le quatrième (14) conduits sont équipés d'ouvertures filetées (31, 11, 12) dans lesquelles l'on peut visser une vis ayant un trou et etant apte à comprimer contre le fond un anneau élastique pour assurer l'étanchéité d'un tuyau flexible introduit dans le trou de ladite vis.

9. Joint tournant suivant l'une quelconque des revendications qui précèdent, caractérisé en ce qu'il est fabriqué en polytétrafluoroéthylène.

10. Joint tournant suivant l'une quelconque des revendications de 1 à 9, caractérisé par l'emploi dans un appareil de fabrication de préformes pour fibres optiques par la méthode CVD, pour vehiculer des réactifs corrosifs sous pression à travers le premier et deuxième conduit et un tube support tournant.

GE

GU